# EUROPEAN PATENT APPLICATION

(11) **EP 1 391 815 A1**
(43) Date of publication of application: **25.02.2004**
(21) Application number: 02405714.3
(22) Date of filing: 22.08.2002
(51) Int. Cl.: G06F 9/44

(54) **Method and system for filtering aspects in structures of a software system**

(71) Applicant: ABB RESEARCH LTD., 8050 Zürich (CH)
(72) Inventor: Naedele, Martin, 8048 Zürich (CH); Vetter, Claus, 5405 Baden-Dättwil (CH); Werner, Thomas, 5404 Baden (CH)
(74) Representative: ABB Patent Attorneys

(57) **Abstract**

The invention is directed to a method for filtering aspects in a software system comprising a plurality of aspect object structures each comprising a plurality of aspect objects and providing a description of the dependencies between real world objects represented by the aspect objects, including at least one aspect, comprising the following steps: -filtering the aspects of a selected aspect object structure depending on a combination of the criteria a) the aspect object structure selected; and b) a predetermined range of aspects; and -making available for access only those aspects within said selected aspect object structure which have matched the filtering criteria. The invention is also to a system for performing the method.

## Description

### Technical field of the invention

The present invention relates to a method for filtering aspects in a software system and to a system implementing the method.

### State of the art

The present invention is concerned with computerised systems relating to real world objects. An example for a computerised system in the meaning of the present invention is a computerised system for control which may be used for controlling a number of single devices, an object in a process, a complete equipment in any location including plants, homes, or other facilities, as well as a process or an industrial installation such as a steel mill, a paper mill, or an automated factory. Particularly, the invention helps in integrating many and varied types of information within a computerised system.

Two general themes in the operation of complex systems such as industrial plants as well as management systems are information availability and information integration. I.e., information must be available at the right place and at the right time, independent of where the information comes from. This results in several requirements. First, it must be possible to seamlessly integrate information from a variety of existing sources. Secondly, it must be possible to integrate new sources of information, such as applications with a certain functionality, in a straightforward way, without having to undergo lengthy and difficult efforts of updating and modifying the existing system to include these new applications.

Particularly in plant operations as well as asset lifecycle management, there is a central problem in keeping together, managing, and accessing information about a large number of plant and process entities. These entities or real world objects, are of many different kinds. They can be physical process objects, like a valve, or more complex, like a reactor. Other examples are products, material, batches, manufacturing orders, customer accounts, etc.

An example of such a system for information and control integration is the ABB Aspect Integrator Platform (AIP). The AIP is an information integration platform based on the notion of objects as access points to information retrieval. Associated with each object (aspect object) are different kinds of information (aspects) and information processing programming code (aspect implementations) associated with these aspects to provide information or execute behaviour. Each aspect object is of a certain object type and part of this type definition is a set of aspects associated with the aspect object and in consequence, the set of aspect implementations required for implementing these aspects.

Throughout the specification of this invention, the following definitions shall apply to the terms used in connection with the description of the systems.

Real world object: any entity having either a physical shape or a logical entity and exhibiting at least one behaviour, with which a representation/control system should interact. Examples may be (in particular in the context of plant management) machines, engines, pipelines, valves, computers, computer programs, customer accounts, manufacturing orders, etc.

Software object (object): a programming construct as well known in the field of object oriented programming.

Object type: An abstract definition of objects of a certain kind, i.e. of objects sharing the same methods and the same data structures. When programming, a "class" holding the object type definition is "instantiated" to create concrete objects. An object type may e.g. be a program window or a logical representation of valves, while an object is a particular program window or a representation of e.g. one particular valve.

Aspect: a facet of a real world object; a logical/systematic point of view of looking at a real world object. In other words, an aspect is a mathematical subset of all the information and behaviour associated with a real world object. The term is used in a bipartite manner. One portion of an aspect is the concept as such for the real world object; while the other portion concerns how the aspect is represented within aspect objects.

Aspect object: similar to a software object, this is a construct comprising at least one aspect for a real world object. It is a representation for real world objects, the aspects of which are "contained" in the aspect object. Software wise, an aspect object is a container of references to aspect implementations. In contrast to a classical software object, it does not directly contain data and methods, but rather partitions those into its aspects. It may be implemented using e.g. object oriented technologies, or component technology like COM or .NET.

Aspect type: an abstract definition of aspects of a certain kind, similar to an object class of classical Object oriented programming in that the term refers to abstract definitions (similar to an object type), but also to references to aspect implementations (similar to the object implementation also contained in an object class). It does not contain, but references the implementation of the functionality of a certain aspect. Examples for aspect types are the location of a real world object, its functionality, its status, its maintenance status, its user manual etc. Software wise, the aspect type contains binding information between an aspect and its aspect implementation.

Aspect implementation: a programming construct implementing a certain aspect or a group of aspects. It may either be a specially written code, or may be of pre-existing program, which is "wrapped" by a so called aspect system object, in order to make it accessible to the system. An aspect implementation may e.g. a program for determining and/or setting the status of a valve, a web browser displaying operating manuals for a machine, a mail client able to order spare parts for a machine, or a program for logging maintenance work on a machine. An aspect implementation may also be an object/group of objects in a program, or a component, like a COM component.

Aspect framework: a runtime environment for aspect implementations and aspect;objects.

Aspect directory: included in the aspect framework, the aspect directory holds all information on all relations among the above components of the system.

Aspect object structure: an organisation (preferably a hierarchical tree organisation) of aspect objects providing a description of the dependencies between real world objects. An aspect object can exist in multiple structures. Examples for structures are functional and location structures.

Software system: A collection of all aspect objects and their aspects, structures, and aspect implementations including an aspect framework, for implementing a real world system consisting of a plurality of real world objects.

In order to avoid ever and ever again re-implementing the same object types all over ABB, especially for common aspect objects like "company", "location", "person", "order", "device", "valve" etc., an ABB wide aspect object type library is desirable. For this global type library, each object type will be designed with regard to reusability in as many different contexts as possible, i.e. with any many aspects and aspect implementations as necessary for these contexts.

Aspect objects may be grouped and linked together in aspect object structures all having a related context, like location structure or functional structure. At least on of these software systems for control, namely the AIP (aspect integrator platform) from ABB allows for the aspect objects to be contained in more than one aspect object structure.

The navigation user interface used for displaying the aspect object structure and navigating through this structure is for the purposes of the present invention called a structure browser. An example for such a structure browser is ABB's "Plant Explorer". A structure browser may typically consist of a navigation window showing a tree structure for navigation, representing the aspect object structure currently displayed, another window showing different aspects available for the node (aspect object, or compositions of several aspect objects etc.) selected in the navigation window, and a further window with the user interface of an aspect implementation with which the uaser accesses information associated with the selected aspect. Via a list box, one of the several available aspect object structures may be selected for navigation. It might also be possible to devise structure browser with multiple windows, each displaying a different (or the same, at a different node) aspect object structure.

Conventionally, a menu item "Filter" allows to filter out a certain subset of the aspects, which are then no longer displayed by the navigation window. However, the aspect filter in the current state of the art is applied independently of the structure selected for navigation. Thus, still aspects will be displayed, which might be of no interest to the user in respect to a certain structure, e.g. a "spare parts" aspect when viewing a location structure. The aspects associated with an aspect object stem from all the different contexts, in which the object is used, and information about it is processed.

It is therefore the object of the present invention to provide better filters, which allow a more contextual filtering of aspects to be displayed by the structure browser.

### Description of the invention

This object is solved by providing a method for filtering aspects according to independent claim 1, and the software system according to independent claim 9. Further advantages, aspect and details of the invention will become more readily apparent from the dependent claims, and the description.

The basic idea of the invention is to consider not only a list of aspects for filtering, but also the aspect object structure displayed.

First, the invention is directed to a method for filtering aspects in a software system comprising a plurality of aspect object structures each comprising a plurality of aspect objects and providing a description of the dependencies between real world objects represented by the aspect objects, including at least one aspect, comprising the following steps:
- filtering the aspects of a selected aspect object structure depending on a combination of the criteria
   a) the aspect object structure selected; and
   b) a predetermined range of aspects; and
- making available for access only those aspects within said selected aspect object structure which have matched the filtering criteria.

Through this approach, the filtering will not be done only based on one criterion, "Is aspect scrutinised contained in a filter list?" but also based on the second criterion "For which aspect object structure is the filtering to be performed?".

The predetermined range of aspects determines the filtering. However, there are two possible kinds of results to the filtering, a positive filtering and a negative filtering. Those aspects may be made available for access, which are in the predetermined range of aspects or alternatively, those aspects may be made available for access, which are not in the predetermined range of aspects. One approach is an including one, while the other is an excluding one. Both may be taken, depending on the implementation of the method an practical considerations.

Several ways for setting up and grouping the aspects/structures to be filtered may be considered.

First, it is possible that for every aspect object structure in the software system, a filtering means is provided, which holds information on the predetermined range of aspects. The filtering means is here connected with the structure, and there will be one filtering means per structure.

It is also possible that for every aspect in the software system, a filtering means is provided, which holds information on at least one aspect object structure, for which said aspect belongs to the predetermined range of aspects for said aspect object structure. The filtering means is here connected with the aspect, and there will be one filtering means per aspect.

Finally, it is possible that for every aspect object in the software system, a filtering means is provided, which holds information on which of said aspect object's aspects belong to the predetermined range of aspects of which aspect object structure. The filtering means is here connected with the aspect object, and there will be one filtering means per aspect object.

Every one of these approaches has its own merits, which inter alia reside in the effort needed for changing the filtering mechanism when changes are made to the system. In the first approach, adding a new structure will be straightforward, since only a new filtering means for the new structure needs to be added, while in the second approach, adding a new aspect is similarly simple, just adding a new filtering means for the new aspect.

The predetermined range of aspects does not necessarily have to be preset without any options for modifications. In contrast, in a preferred embodiment, the predetermined range of aspects may be modified by a user by selecting or deselecting aspects from an initial predetermined range of aspects. Here, the initial predetermined range of aspects is to be understood as a range which has previously been set up, e.g. by a programmer or administrator for the system, structure, aspect etc, or by a user throughout a previous modification.

The inventive method may further comprise the step:
- displaying in a structure browser, the aspects which have been made available for the selected aspect object structure.

While for the purposes of describing the present invention, making available the results of the filtering, and displaying them, have been described as distinguished features of the invention, it is to be understood that these may very well be the same. The aspects could be made available by the same element, like a filtering means, this could be combined in a single entity, like a structure browser containing the filtering means.

The invention is further directed to a system. All that as said with respect to the method also applies to the system, and vice versa, so that mutual reference is made.

The invention is hence directed to a system, comprising a plurality of aspect object;structures each comprising a plurality of aspect objects and providing a description of the dependencies between real world objects represented by the aspect objects, including at least one aspect, characterised by filtering means for filtering the aspects of a selected aspect object structure depending on a combination of the criteria
a) the aspect object structure selected; and
b) a predetermined range of aspects; and
notification means for making available for access only those aspects within said selected aspect object structure which have matched the filtering criteria.

According to a preferred embodiment of the invention, said filtering means may comprise means for storing information for at least one aspect object structure in the software system on the predetermined range of aspects.

Alternatively, said filtering means may comprise means for storing information for at least one aspect in the software system on at least one aspect object structure, for which said aspect belongs to the predetermined range of aspects for said aspect object structure.

Finally, said filtering means may comprise means for storing information for at least one aspect object in the software system on which of said aspect object's aspects belong to the predetermined range of aspects of which aspect object structure.

The above described three options for filtering means reflect the above described approaches for storing the information required for filtering of aspects. Several approaches to implementing these means of information may are at the programmer's disposition. The aspect directory of the existing system could be used, a database could be set up having according entries, or the means of information could be realised using simple text documents, like XML documents.

The system according to the invention may further comprise a structure browser, for displaying the selected structure and the aspects contained in said selected structure, which have been made available for access.

In the inventive system, selection means may be provided for modifying the predetermined range of aspects by a user selecting or deselecting aspects from an initial predetermined range of aspects.

### Ways to practising the invention

The proposed invention is to add to the information navigation system (structure browser) a facility, which allows to define filters on aspects depending on the aspect object structure.

This can be realised in several different ways, for example:
1. A dedicated user interface element, like a dialog or a wizard, and filter on the software system or structure browser level is used for defining the visible aspects from the total set of aspects per structure. This method is easily extended for new structures, since only one addition to the filter information is required for a new structure, but is more difficult to extend for new aspects, since filters/means of information for all the structures in the system have to be changed.
2. A dedicated user interface element and filtering means associated with the aspect type is used to configure in which aspect object structures the aspect may appear. This allows for ease of use when adding new aspects to the system, since only one addition for that aspect is needed, in contrast to the effort needed to deal with a new aspect object structure, since all the means of information for all the aspects need to be updated.
3. With similar advantages or disadvantages, it is also possible to associate the user interface and filtering means with an individual aspect object and its aspects.

The benefit of the invention is faster and more convenient navigation through the aspect objects structures, as only information relevant in the context under consideration is shown. This saves time and money for the user and is promoted as "context sensible information filtering". But not only the navigation will be faster, but it will also be less error prone since the user is only confronted with the structure information, which is task relevant.

As an example, lets assume that an aspect object "valve" has two aspects "control, algorithm" and "maintenance record". The aspect object is referenced, among others, in the aspect object structures "control hierarchy" and ''maintenance''. It is likely that a user navigating through the "maintenance" structure is interested in the "maintenance record" aspect, but it is unlikely that he/she is also interested in the "control algorithm" aspect, and vice versa. Therefore, it is possible to remove visual clutter for the user if the "maintenance" filtering means suppressed the display of the "control algorithm" aspect and vice versa. If the maintenance user is nevertheless interested in the "control algorithm" aspect, he can still from the object in the "maintenance" aspect object structure via its reference to the "control hierarchy" structure change to that structure and find the desired aspect there.

A computer program according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

The system or an apparatus according to the invention preferably comprises a data processor, a memory coupled to the processor and computer program code means stored in said memory, where said computer program code means, when executed by the processor, causes the method according to the invention to be executed.

## Claims

1. A method for filtering aspects in a software system comprising a plurality of aspect object structures each comprising a plurality of aspect objects and providing a description of the dependencies between real world objects represented by the aspect objects, including at least one aspect, comprising the following steps:
- filtering the aspects of a selected aspect object structure depending on a combination of the criteria
a) the aspect object structure selected; and
b) a predetermined range of aspects; and
- making available for access only those aspects within said selected aspect object structure which have matched the filtering criteria.

2. Method according to claim 1, **characterised in that** those aspects are made available for access, which are in the predetermined range of aspects.

3. Method according to claim 1, **characterised in that** those aspects are made available for access, which are not in the predetermined range of aspects.

4. Method according to any of claims 1 to 3, **characterised in that** for every aspect object structure in the software system, a filtering means is provided, which holds information on the predetermined range of aspects.

5. Method according to any of claims 1 to 3, **characterised in that** for every aspect in the software system, a filtering-means is provided, which holds information on at least one aspect object structure, for which said aspect belongs to the predetermined range of aspects for said aspect object structure.

6. Method according to any of claims 1 to 3, **characterised in that** for every aspect object in the software system, a filtering means is provided, which holds information on which of said aspect object's aspects belong to the predetermined range of aspects of which aspect object structure.

7. Method according to any of claims 1 to 6, **characterised in that** the predetermined range of aspects may be modified by a user by selecting or deselecting aspects from an initial predetermined range of aspects.

8. Method according to any of claims 1 to 7, **characterised by** the further step:
- displaying in a structure browser, the aspects which have been made available for the selected aspect object structure.

9. System, comprising a plurality of aspect object structures each comprising a plurality of aspect objects and providing a description of the dependencies between real world objects represented by the aspect objects, including at least one aspect, **characterised by**
filtering means for filtering the aspects of a selected aspect object structure depending on a combination of the criteria
a) the aspect object structure selected; and
b) a predetermined range of aspects; and
notification means for making available for access only those aspects within said selected aspect object structure which have matched the filtering criteria.

10. System according to claim 9, **characterised in that** said filtering means comprises means for storing information for at least one aspect object structure in the software system on the predetermined range of aspects.

11. System according to claim 9, **characterised in that** said filtering means comprises means for storing information for at least one aspect in the software system on at least one aspect object structure, for which said aspect belongs to the predetermined range of aspects for'said aspect object structure.

12. System according to claim 9, **characterised in that** said filtering means comprises means for storing information for at least one aspect object in the software system on which of said aspect object's aspects belong to the predetermined range of aspects of which aspect object structure.

13. System according to any of claims 9 to 12, **characterised in that** is further comprises a structure browser, for displaying the selected structure and;the aspects contained in said selected structure, which have been made available for access.

14. System according to any of claims 9 to 13, **characterised in that** selection means are provided for modifying the predetermined range of aspects by a user selecting or deselecting aspects from an initial predetermined range of aspects.
